# EUROPÄISCHE PATENTSCHRIFT

(11) **EP 3 309 418 B1**
(45) Veröffentlichungstag und Bekanntmachung des Hinweises auf die Patenterteilung: **26.06.2019**
(21) Anmeldenummer: 17189732.5
(22) Anmeldetag: 07.09.2017
(51) Int. Cl.: F16C 29/00, F16C 29/08, F16J 15/16

(54) **LINEARBEWEGUNGSVORRICHTUNG MIT ABDECKPLATTE WELCHE DICHTLIPPEN AUFWEIST**
LINEAR MOVEMENT DEVICE WITH A COVERPLATE THAT HAS SEALING LIPS
DISPOSITIF DE MOUVEMENT LINÉAIRE POURVU DE PLAQUE DE RECOUVREMENT COMPORTANT DES LÈVRES D'ÉTANCHÉITÉ

(30) Priorität: 13.10.2016 DE 102016219923
(43) Veröffentlichungstag der Anmeldung: 18.04.2018
(73) Patentinhaber: Robert Bosch GmbH, 70442 Stuttgart (DE)
(72) Erfinder: Smetak, Thorsten, 97526 Sennfeld (DE); Keller, Bernhard, 97535 Wasserlosen (DE)
(74) Vertreter: Maiß, Harald

(56) Entgegenhaltungen:
- EP-A2- 0 987 468
- DE-U1- 9 017 035
- DE-U1-202015 102 806
- US-A- 6 000 292

## Beschreibung

Die Erfindung betrifft eine Linearbewegungsvorrichtung gemäß dem Oberbegriff von Anspruch 1.

Aus der DE 20 2015 102 806 U1 ist eine Linearbewegungsvorrichtung mit einem Gehäuse und einem Schlitten bekannt. Der Schlitten ist in Richtung einer Längsachse beweglich am Gehäuse geführt. Weiter ist eine Abdeckplatte mit zwei Schlitzen vorgesehen, die jeweils von einer ersten und einer zweiten Dichtlippe abgedeckt werden. Die Endplatte wird über zwei Endabschnitte einstückig zusammengehalten. Der Schlitten durchsetzt die beiden Schlitze jeweils mit einem Verbindungsabschnitt.

Ein Vorteil der vorliegenden Erfindung besteht darin, dass im Bereich der stirnseitigen Enden kein Schmutz zwischen die erste und die zweite Dichtlippe eindringen kann.

Gemäß dem selbständigen Anspruch wird vorgeschlagen, dass zumindest einem Schlitz zumindest eine gesonderte Endkappe zugeordnet ist, welche an einem jeweils zugeordneten Endabschnitt der Abdeckplatte befestigt ist, wobei die Endkappe die betreffende erste und die betreffende zweite Dichtlippe stirnseitig abdichted.

Die Abdeckplatte ist vorzugsweise aus Aluminium im Strangpressverfahren hergestellt, so dass der entsprechende Rohkörper in Richtung der Längsachse eine konstante Querschnittsform aufweist. Nach dem Strangpressen kann die Abdeckplatte spanabheben bearbeitet sein, wodurch sich eine nicht konstante Querschnittsform ergibt. Der wenigstens eine Schlitz ist vorzugsweise mittels einer Fräsbearbeitung hergestellt, höchst vorzugsweise mittels eines Schaftfräsers.
Die erste und/oder die zweite Dichtung bestehen vorzugsweise aus einem Elastomer, höchst vorzugsweise aus Fluorkautschuk (FKM) oder aus Silikonkautschuk.

Vorzugsweise sind die erste und/oder die zweite Dichtlippe an ihrer Oberfläche mit einem Gleitlack versehen, um die Reibkraft bzw. den Verschleiß zwischen dem Verbindungsabschnitt und der ersten bzw. der zweiten Dichtlippe zu minimieren. Die erste und/oder die zweite Dichtlippe sind vorzugsweise im Extrusionsverfahren hergestellt. Die erste und die zweite Dichtlippe liegen vorzugsweise mit einem freien Ende unmittelbar aneinander an.

Die Endkappen bestehen vorzugsweise aus Kunststoff, beispielsweise aus Polyamid, wobei sie höchst vorzugsweise im Spritzgussverfahren hergestellt sind. Vorzugsweise sind allen Schlitzen zwei Endkappen zugeordnet, welche in Richtung der Längsachse an gegenüberliegenden Enden der betreffenden ersten und zweiten Dichtlippe angeordnet sind. Vorzugsweise sind zwei Schlitze und zwei Verbindungsabschnitte vorgesehen.

In den abhängigen Ansprüchen sind vorteilhafte Weiterbildungen und Verbesserungen der Erfindung angegeben.

Es kann vorgesehen sein, dass die erste und die zweite Dichtlippe derart in die jeweils zugeordnete Endkappe hineinragen, dass sie innerhalb der Endkappe aneinander anliegen. Hierdurch ergibt sich eine besonders gute stirnseitige Abdichtung der Paare aus erste und zweite Dichtlippe.

Es kann vorgesehen sein, dass sich die erste und die zweite Dichtlippe jeweils über beide Endabschnitte erstrecken.

Es kann vorgesehen sein, dass das Gehäuse einen Hauptkörper umfasst, welcher als Profilkörper ausgebildet ist, wobei er sich in Richtung der Längsachse erstreckt, wobei zwei gesonderte Endblöcke vorgesehen sind, welche in Richtung der Längsachse an gegenüber liegenden Enden des Hauptkörpers befestigt sind, wobei die Endabschnitte und die zumindest eine Endkappe jeweils zumindest abschnittsweise im Bereich eines jeweils zugeordneten Endblocks angeordnet sind. Hierdurch wird der Bewegungshub der Linearbewegungsvorrichtung durch die Endkappen nicht beeinträchtigt.

Vorzugsweise sind beide Endabschnitte und alle Endkappen vollständig im Bereich des jeweils zugeordneten Endblocks angeordnet. Der Hauptkörper ist im Querschnitt betrachtet vorzugsweise U-förmig ausgebildet. Zwischen den beiden Endblöcken kann eine gesonderte Zwischenplatte angeordnet sein, welche sich über die gesamte Länge des Hauptkörpers erstreckt. Vorzugsweise liegt die Abdeckplatte an der Zwischenplatte von außen an.

Es kann vorgesehen sein, dass jeder Schlitz zwei aufeinander zu weisende erste Seitenflächen aufweist, welche sich parallel zur Längsachse erstrecken, wobei die Endabschnitte für jeden Schlitz jeweils eine zweite Seitenfläche bilden, welche die betreffenden ersten Seitenflächen miteinander verbindet, wobei die zweiten Seitenflächen jeweils zumindest abschnittsweise im Bereich eines zugeordneten Endblocks angeordnet sind. Ein derartiger Schlitz ist einfach herstellbar, wobei er den Bewegungshub der Linearbewegungsvorrichtung nicht beeinträchtigt. Die ersten Seitenflächen sind vorzugsweise eben ausgebildet. Die zweiten Seitenflächen sind vorzugsweise kreiszylindrisch ausgebildet.

Es kann vorgesehen sein, dass jedem Schlitz zwei hinterschnittene Nuten zugeordnet sind, welche sich parallel zur Längsachse erstrecken, wobei sie quer zur Längsachse auf gegenüberliegenden Seiten des betreffenden Schlitzes in der Abdeckplatte angeordnet sind, wobei sie sich über die beiden Endabschnitte erstrecken, wobei die erste und die zweite Dichtlippe jeweils einen Befestigungsfortsatz aufweist, welcher formschlüssig in eine zugeordnete hinterschnittene Nut eingreift. Die entsprechende Linearbewegungsvorrichtung ist besonders kostengünstig, da die genannten Konturen im Rahmen des Strangpressens der Abdeckplatte bzw. der Extrusion der Dichtlippe mit herstellbar sind. Die hinterschnittene Nut ist im Querschnitt betrachtet vorzugsweise T-förmig ausgebildet. Die erste und/oder die zweite Dichtlippe sind vorzugsweise als Profilkörper ausgebildet, welche sich mit einer konstanten Querschnittsform in Richtung der Längsachse erstrecken.

Es kann vorgesehen sein, dass sich die erste und die zweite Dichtlippe jeweils mit einer konstanten Querschnittsform entlang der Längsachse erstrecken, wobei sie an einem quer zur Längsachse freien Ende jeweils zumindest zwei Stege aufweisen, wobei die Stege der ersten und der zweiten Dichtlippe abseits des Verbindungsabschnitts kammartig ineinander greifen. Damit ist sicher ausgeschlossen, dass im Berührbereich zwischen erster und zweiter Dichtlippe Schmutz in die Linearbewegungsvorrichtung eindringt. Weiter ist sichergestellt, dass die freien Enden der Dichtlippen die gewünschte Ausrichtung relativ zueinander haben. Die Stege haben vorzugsweise jeweils ein verrundetes freies Ende. Das verrundete Ende verursacht nur geringe Reibkräfte, wenn es am Verbindungskörper entlang gleitet. Die Querschnittsformen der ersten und der zweiten Dichtlippe sind vorzugsweise identisch ausgebildet. Vorzugsweise haben die erste und die zweite Dichtlippe jeweils drei Stege.

Es kann vorgesehen sein, dass die zumindest eine Endkappe von einem ersten Schraubbolzen durchsetzt ist, welcher ein Außengewinde aufweist, wobei der erste Schraubbolzen derart zwischen der ersten und der zweiten Dichtlippe angeordnet ist, dass das Außengewinde die erste und die zweite Dichtlippe in Richtung der Längsachse hält. Die Gewindegänge des Außengewindes verformen die erste und die zweite Dichtlippe vorzugsweise jeweils elastisch und/oder plastisch, so dass ein reibschlüssiger und/oder ein formschlüssiger Halt gegeben ist. Der Eingriff zwischen dem Außengewinde und der ersten und der zweiten Dichtlippe erfolgt vorzugsweise abseits der wenigstens zwei Stege. Das genannte Außengewinde ist vorzugsweise als Grobgewinde bzw. als Holzgewinde ausgebildet.

Es kann vorgesehen sein, dass die zumindest eine Endkappe in Richtung der Längsachse von einem zweiten Schraubbolzen durchsetzt ist, welcher in einen zugeordneten Endabschnitt der Abdeckplatte eingeschraubt ist. Damit ist die Endkappe fest mit der Abdeckplatte verbunden. Vorzugsweise ist die Abdeckplatte mit einer Schraubnut versehen, welche sich im Endabschnitt parallel zur Längsachse erstreckt, wobei der zweite Schraubbolzen in die Schraubnut eingeschraubt ist. Die Schraubnut ist vorzugsweise in einer Flucht mit einem zugeordneten Schlitz angeordnet, so dass sie ausschließlich im Bereich der Endabschnitte der Abdeckplatte vorhanden ist.

Es kann vorgesehen sein, dass die Abdeckplatte zwei quer zur Längsachse voneinander weg weisende Seitenränder aufweist, welche sich parallel zur Längsachse erstrecken, wobei jedem Seitenrand eine Befestigungsnut im Hauptkörper zugeordnet ist, welche abseits der Abdeckplatte angeordnet ist, wobei sie parallel zur Längsachse verläuft, wobei jedem Seitenrand wenigstens zwei Befestigungsklammern zugordnet sind, welche in die betreffende Befestigungsnut formschlüssig eingreifen, wobei sie den betreffenden Seitenrand umgreifen. Damit ist die Abdeckplatte fest mit dem Gehäuse verbunden, wobei die Befestigungsklammern nur wenig über den Umriss des Gehäuses überstehen. Die Befestigungsklammern können jeweils mittels wenigstens einer Schraube, vorzugsweise einem Gewindestift, gegen den Hauptkörper und/oder die Abdeckplatte verklemmt sein. Es ist aber auch denkbar, dass die Befestigungsklammern aus Federstahl bestehen, wobei sie unter Vorspannung am Hauptkörper und der Abdeckplatte anliegen.

Es kann wenigstens eine Dichtlippenführung vorgesehen sein, welche an einem zugeordneten Verbindungsabschnitt angeordnet ist, wobei die Dichtlippenführung zwei erste Führungsflächen aufweist, welche aufeinander zu weisen, wobei die betreffende erste und zweite Dichtlippe abschnittsweise zwischen den ersten Führungsflächen angeordnet sind, wobei sie dort unmittelbar aneinander anliegen. Hierdurch wird vermieden, dass sich unmittelbar anschließend an den Verbindungskörper ein offener Spalt zwischen der ersten und der zweiten Dichtlippe ergibt. Die Dichtlippenführung ist vorzugsweise als gesondertes Bauteil ausgebildet, welches höchst vorzugsweise am Verbindungkörper befestigt ist.

Es kann zumindest eine Endkappe mit einem Druckluftanschluss versehen sein, so dass Druckluft zwischen die betreffende erste und zweite Dichtlippe leitbar ist. Hierdurch kann das Innere der Linearbewegungsvorrichtung unter geringen Überdruck gesetzt werden, so dass das Eindringen vom Schmutz weitgehend verhindert wird.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine perspektivische Ansicht einer erfindungsgemäßen Linearbewegungsvorrichtung;
- Fig. 2: einen Querschnitt der Linearbewegungsvorrichtung nach Fig. 1;
- Fig. 3: eine perspektivische Ansicht der Abdeckplatte und der Verbindungskörper;
- Fig. 4: eine perspektivische Ansicht der Endkappe;
- Fig. 5: eine perspektivische Ansicht der Dichtlippenführung; und
- Fig. 6: einen Querschnitt der ersten bzw. der zweiten Dichtlippe.

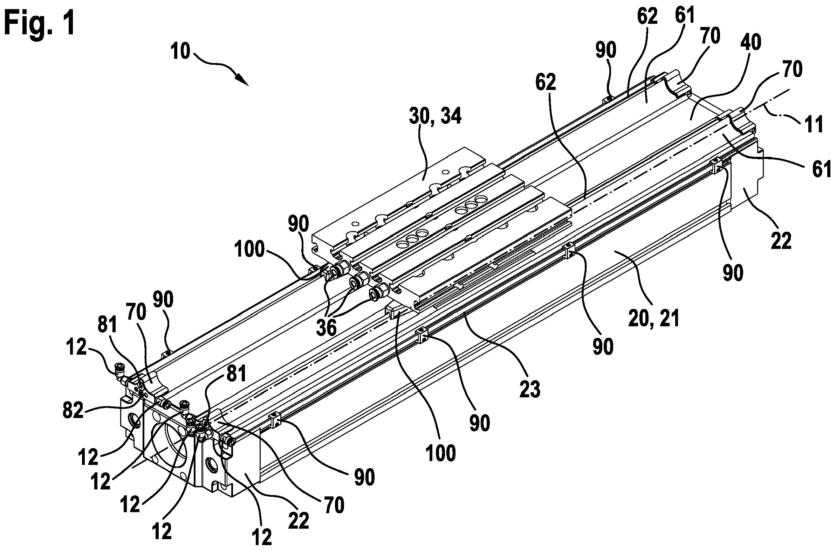

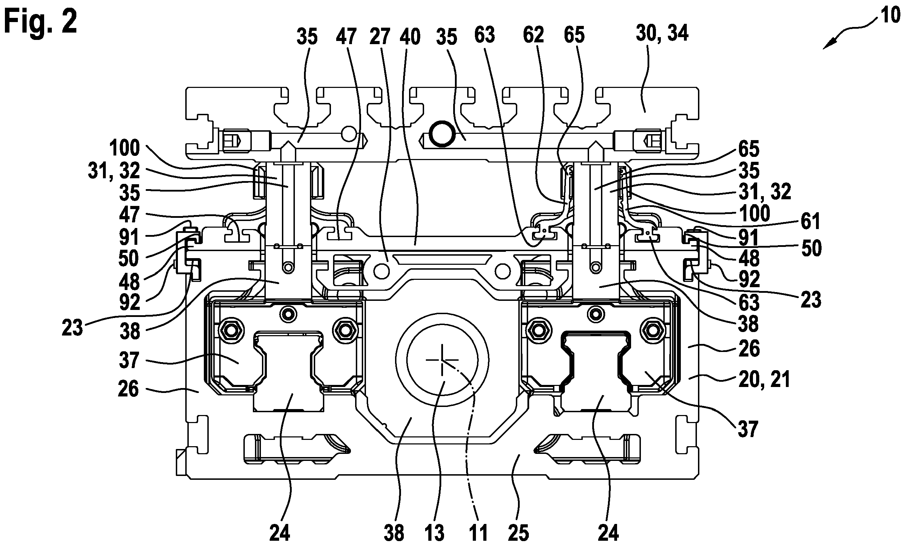

Fig. 1 zeigt eine perspektivische Ansicht einer erfindungsgemäßen Linearbewegungsvorrichtung 10. Die Linearbewegungsvorrichtung 10 umfasst ein Gehäuse 20, welches aus einem Hauptkörper 21 und zwei Endblöcken 22 zusammengesetzt ist. Der Hauptkörper 21 ist aus Aluminium im Strangpressverfahren hergestellt, wobei er spanabhebend nachbearbeitet sein kann. Es handelt sich daher um einen Profilkörper, der entlang der Längsachse 11 eine im Wesentlichen konstante Querschnittsform aufweist. Die Endblöcke 22 sind bezüglich der Längsachse 11 an gegenüberliegenden Enden des Hauptkörpers 21 befestigt, vorzugsweise mittels Schrauben. In den Endblöcken 22 können Drehlager für eine Gewindespindel (Nr. 13 in Fig. 2) aufgenommen sein, wobei die Gewindespindel das Gehäuse 20 über seine gesamte Länge durchsetzt.

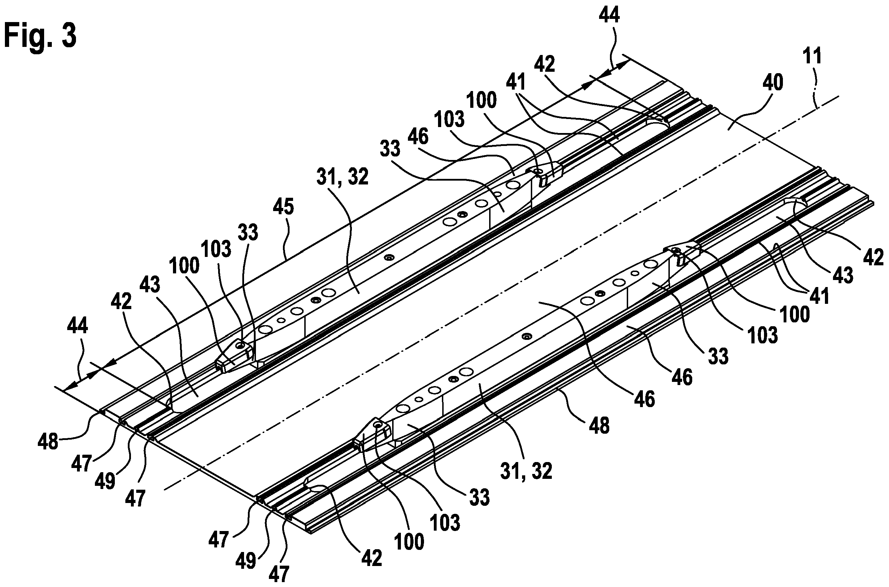

An dem Gehäuse 20 ist ein Schlitten 30 in Richtung der Längsachse 11 beweglich gelagert. Der Schlitten 30 ragt mit einer Tischplatte 34 aus dem Gehäuse 20 heraus, wobei er im Übrigen geschützt innerhalb des Gehäuses 20 angeordnet ist. Auf dem Hauptkörper 21 und den Endblöcken 22 liegt eine gesonderte Abdeckplatte 40 auf, welche mit mehreren Befestigungsklammern 90 am Hauptkörper 20 befestigt ist. Die Abdeckplatte 40 hat zwei Schlitze (Nr. 43 in Fig. 3), welche sich parallel zur Längsachse 11 erstrecken, wobei sie quer dazu beabstandet sind. Die Schlitze sind jeweils mit einer ersten und einer zweiten Dichtlippe 61; 62 überdeckt. An den beiden in Richtung der Längsachse 11 gegenüberliegenden Enden der Dichtlippenpaare 61; 62 ist jeweils eine gesonderte Endkappe 70 angeordnet, welche an einem zugeordneten Endabschnitt (Nr. 44 in Fig. 3) der Abdeckplatte 40 befestigt ist. Die Endkappen 70 verhindern, dass von der Stirnseite her Schmutz zwischen die Dichtlippen 61; 62 gelangen kann. Die Endkappen 70 können mit einem Druckluftanschluss 12 versehen sein, mit dem Druckluft in das Gehäuse 20 geleitet werden kann, so dass innerhalb des Gehäuses 20 ein minimal höherer Luftdruck herrscht als außerhalb des Gehäuses 20. Hierdurch wird sicher vermieden, dass Schmutz über die Berührstellen der Dichtlippen 61; 62 in das Gehäuse 20 eintreten kann. In Fig. 1 ist eine Vielzahl von möglichen Ausführungen (stirnseitige bzw. seitliche Anordnungen, gerader bzw. gewinkelter Druckluftanschluss) der Druckluftanschlüsse 12 dargestellt, wobei ein Dichtlippenpaar 61; 62 nur jeweils mit einem Druckluftanschluss 12 versehen ist. Zusätzlich oder alternativ hierzu kann das Gehäuse 20, insbesondere einer oder beide Endblöcke 22 oder der Hauptköper 21, mit einem entsprechenden Druckluftanschluss versehenen sein.

Weiter ist auf die Schmieranschlüsse 36 an der Tischplatte 34 hinzuweisen, über welche die Führungswägen (Nr. 37 in Fig. 2) und die Gewindemutter geschmiert werden können. Dargestellt sind drei mögliche Anordnungen des Schmieranschlusses 36, wobei vorzugsweise nur eine dieser Anordnungen genutzt wird.

Fig. 2 zeigt einen Querschnitt der Linearbewegungsvorrichtung 10 nach Fig. 1. Die Schnittebene verläuft senkrecht zur Längsachse 11 durch die Längsmitte des Schlittens 30. Der Hauptkörper 21 ist im Querschnitt betrachtet U-förmig mit einer Basis 25 und zwei U-Schenkeln 26 ausgebildet. Zwischen den beiden freien Enden der U-Schenkel 26 ist eine gesonderte Zwischenplatte 27 angeordnet, welche beispielsweise gemäß der DE 197 38 988 B4, an den beiden Endblöcken (Nr. 22 in Fig. 1) befestigt ist, so dass sie ebenfalls Bestandteil des Gehäuses 20 ist. Die Zwischenplatte 27 und die freien Enden der U-Schenkel 26 bilden eine ebene Oberfläche, auf welcher die Abdeckplatte 40 mit ihrer ebenen Unterseite aufliegt. Die Abdeckplatte 40 erstreckt sich im Wesentlichen über die gesamte Breite des Hauptkörpers 30, so dass ihre beiden voneinander weg weisenden Seitenränder 48 in etwa in einer Flucht mit der seitlichen Außenoberfläche des jeweils zugeordneten U-Schenkels 26 angeordnet sind. Die Befestigungsklammern 90 umgreifen den jeweils zugeordneten Seitenrand 48 der Abdeckplatte 40, wobei sie in die dort angeordnete Vertiefung 50 eingreifen. Weiter greifen die Befestigungsklammern 90 in eine Befestigungsnut 23 ein, welche außen an den U-Schenkeln 26 benachbart zum zugeordneten Seitenrand 48 angeordnet ist. In die Befestigungsklammern 90 sind jeweils ein erster und ein zweiter Gewindestift 91; 92 eingeschraubt, welche senkrecht zueinander angeordnet sind. Der erste Gewindestift 91 verspannt die Befestigungsklammer 90 vertikal gegen die Oberseite der Abdeckplatte 40. Der zweite Gewindestift 92 verspannt die Befestigungsklammer 90 horizontal gegen die Befestigungsnut 23. Die Befestigungsklammer 90 ist im Querschnitt betrachtet in etwa U-förmig ausgebildet. Die Befestigungsnut 23 ist im Querschnitt betrachtet L-förmig ausgebildet.

Näherungsweise im Zentrum des Hauptkörpers 21 ist die Gewindespindel 13 angeordnet, welche bezüglich der Längsachse 11 drehbar am Gehäuse 20 gelagert ist. Die Gewindespindel 13 steht mit einer (nicht dargestellten) Gewindemutter in Schraubeingriff, welche vorzugsweise als Kugelumlaufmutter ausgebildet ist. Die Gewindemutter ist an einem einstückigen Schlittengrundkörper 38 befestigt, welcher vorzugsweise aus Aluminium besteht. Benachbart zu den beiden U-Schenkeln 26 ist jeweils eine Führungsschiene 24 an der Basis 25 des Hauptkörpers 21, vorzugsweise mittels Schraubbolzen befestigt, so dass die Gewindespindel 13 zwischen den Führungsschienen 24 angeordnet ist. Die Führungsschienen 24 bestehen aus gehärtetem Stahl, wobei sie sich mit einer konstanten Querschnittsform parallel zur Längsachse 11 erstrecken. Sie stehen jeweils mit einem oder mehreren Führungswägen 37 in Führungseingriff, vorzugsweise über mehrere Reihen von endlos umlaufenden Wälzkörpern. Die Führungswägen 37 sind ebenfalls an dem Schlittengrundkörper 38 befestigt, vorzugsweise mittels Schrauben.

Der Schlitten 30 durchsetzt die beiden Schlitze jeweils mit einem Verbindungsabschnitt 31. Der Verbindungsabschnitt 31 wird zum einen vom Schlittengrundkörper 38 und zum anderen von einem gesonderten Verbindungskörper 32 gebildet. In der Folge ist es möglich, die Abdeckplatte 40 und den Verbindungskörper 32 entfallen zu lassen, wobei die Tischplatte 34 unmittelbar mit dem Schlittengrundkörper verschraubt ist. Eine derartige Linearbewegungsvorrichtung ist aus dem Katalog bekannt, der am 29.09.2016 unter der Internetadresse http://www.boschrexroth.com/various/utilities/mediadirectory/download/index.jsp?gbj ect_nr=R999000499 abrufbar war. Mit der erfindungsgemäßen Abdeckplatte 40 wird die Abdichtung der bekannten Linearbewegungsvorrichtung verbessert, wobei die Abdeckplatte nachrüstbar ist, ohne dass Veränderungen an der bekannten Linearbewegungsvorrichtung erforderlich sind.

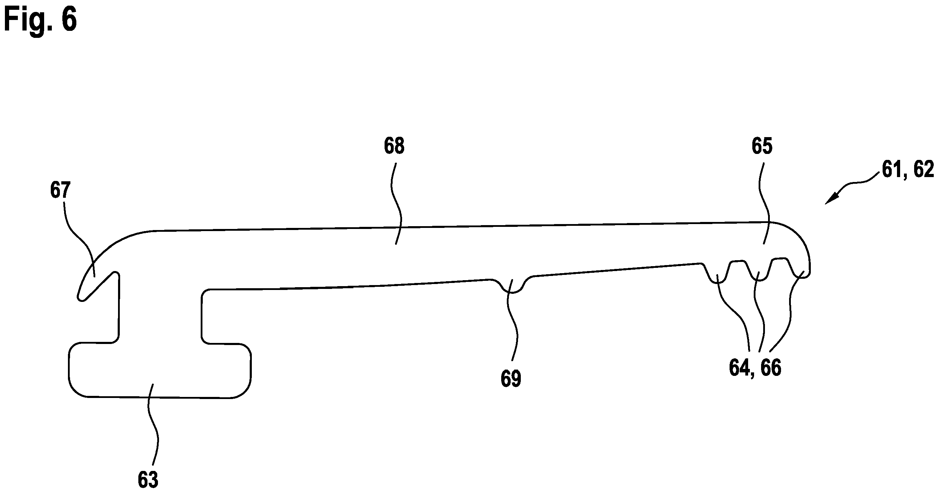

In Fig. 2 sind allein am rechten Verbindungskörper 32 die erste und die zweite Dichtlippe 61; 62 dargestellt, wobei sie tatsächlich an beiden Verbindungskörpern 32 in identischer Weise vorhanden sind. Die erste und die zweite Dichtlippe 61; 62 erstrecken sich jeweils mit der in Fig. 6 dargestellten konstanten Querschnittsform in Richtung der Längsachse 11. Sie bestehen aus einem Elastomer, insbesondere aus Fluorkautschuk (FKM) oder aus Silikonkautschuk. Die erste und die zweite Dichtlippe 61; 62 sind um 180° klappsymmetrisch ausgebildet, so dass für beide Dichtlippen 61; 62 der gleiche Profilkörper verwendbar ist. Die Dichtlippen 61; 62 haben jeweils einen T-förmigen Befestigungsfortsatz 63, mit dem sie in eine angepasste hinterschnittene Nut 47 in der Abdeckplatte 40 eingeschoben sind, so dass sie dort formschlüssig gehalten sind. Der Eingriff zwischen dem Befestigungsfortsatz 63 und der hinterschnittenen Nut 47 ist staubdicht ausgeführt. Die erste und die zweite Dichtlippe 61; 62 sind biegeelastisch, wobei sie im Herstellungszustand die in Fig. 6 dargestellte, in etwa gerade Querschnittsform aufweisen. Im eingebauten Zustand sind sie um bis zu 90° aufgebogen, so dass deren freie Enden 65 unter Vorspannung am Verbindungskörper 32 oder unmittelbar aneinander anliegen. Die Höhe des Verbindungskörpers 32 ist so groß gewählt, dass die Dichtlippen 61; 62 die Tischplatte 34 nicht berühren.

Weiter ist auf die Schmierkanäle 35 hinzuweisen, welche den Schlittengrundkörper 38, die Verbindungskörper 31 und die Tischplatte 34 durchsetzen. Diese stellen eine Schmiermittelaustauschverbindung zwischen dem Schmieranschluss (Nr. 36 in Fig. 1) und den Führungswägen 37 bzw. der Gewindemutter her.

Fig. 3 zeigt eine perspektivische Ansicht der Abdeckplatte 40 und der Verbindungskörper 32. Der Rohkörper der Abdeckplatte 40 wird aus Aluminium im Strangpressverfahren hergestellt, so dass er in Richtung der Längsachse 11 eine konstante Querschnittsform aufweist. In den Rohkörper werden mittels eines Schaftfräsers die beiden langlochförmigen Schlitze 43 eingefräst, welche sich parallel zur Längsachse 11 erstrecken. Die Schlitze 43 erstrecken sich ausschließlich über einen mittleren Abschnitt 45 der Abdeckplatte 40. Der mittlere Abschnitt 45 hat drei Materialbereiche 46, welche durch die Schlitze 43 voneinander getrennt sind. Diese Materialbereiche 43 sind mit den beiden Endabschnitten 44 der Abdeckplatte 40 einstückig verbunden, so dass die gesamte Abdeckplatte 40 fest zusammengehalten wird. Die beiden Endabschnitte 44 sind in Richtung der Längsachse 11 an gegenüberliegenden Enden des mittleren Abschnitts 45 angeordnet.

Die Schlitze 43 haben jeweils zwei parallel beabstandete erste Seitenflächen 41, die vorzugsweise eben ausgebildet sind. Diese sind über zwei kreiszylindrische zweite Seitenflächen 42 miteinander verbunden, welche von den Endabschnitten 44 gebildet werden. Die Endabschnitte 44 und die zweiten Seitenflächen 42 sind jeweils zumindest abschnittsweise, vorzugsweise vollständig, im Bereich eines zugeordneten Endblocks (Nr. 22 in Fig. 1) angeordnet, so dass der nutzbare Bewegungshub des Schlittens durch die Abdeckplatte 40 nicht beeinträchtigt wird.

Mittig fluchtend zu den beiden Schlitzen 32 ist jeweils eine Schraubnut 49 angeordnet, welche bereits beim Strangpressen des Rohkörpers der Abdeckplatte 40 hergestellt wird. Die Schraubnut 49 dient zur Befestigung der Endkappe (Nr. 70 in Fig. 1) mittels eines zweiten Schraubbolzens (Nr. 82 in Fig. 1), der parallel zur Längsachse 11 ausgerichtet ist.

Weiter ist in Fig. 3 zu erkennen, dass sich die hinterschnittene Nut 47 über die gesamte Länge der Abdeckplatte 40 erstreckt, wobei sie seitlich neben dem jeweils zugeordneten Schlitz 43 angeordnet ist.

Der Verbindungskörper 32 ist in seiner Längsmitte quaderförmig ausgebildet. Seine in Richtung der Längsachse 11 gegenüberliegenden Enden laufen spitz aus, so dass die erste und die zweite Dichtlippe (Nr. 61; 62 in Fig. 2) am Übergang zum Verbindungskörper 32 sanft auf- bzw. zurückgebogen werden. Die entsprechenden Einführschrägen 33 haben eine geringe Steigung, wobei am Übergang zum quaderförmigen Bereich des Verbindungskörpers 32 ein großer Krümmungsradius vorgesehen ist. Die Einführschrägen 33 verlaufen über ihre gesamte Länge parallel zu einer Achse, welche senkrecht zur ebenen Unterseite der Abdeckplatte 40 ausgerichtet ist.

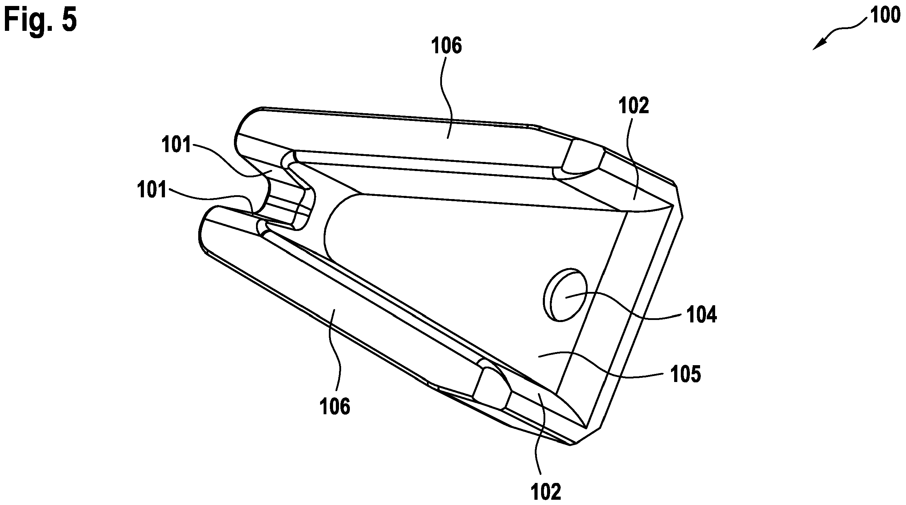

Die spitzen Enden der Einführschrägen 33 sind von einer gesonderten Dichtlippenführung 100 überdeckt, welche in Fig. 5 genauer dargestellt ist. Jedem Verbindungskörper 32 sind zwei gesonderte Dichtlippenführungen 100 zugeordnet, welche in Richtung der Längsachse 11 an gegenüberliegenden Enden des Verbindungskörpers 32 angeordnet sind. Die Dichtlippenführungen 100 sind jeweils mittels einer Befestigungsschraube 103 mit dem Verbindungskörper 100 verschraubt.

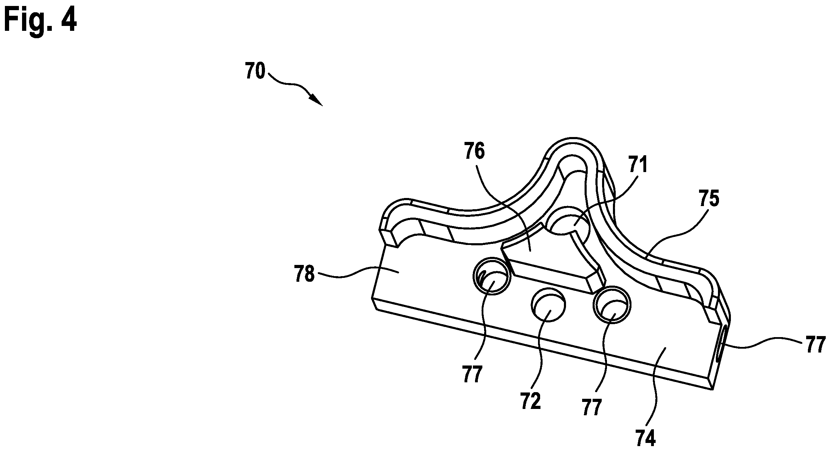

Fig. 4 zeigt eine perspektivische Ansicht der Endkappe 70. Die Endkappe 70 hat eine Grundplatte 74, welche als ebene Platte mit konstanter Dicke ausgebildet ist. Diese liegt mit einem Befestigungsbereich 78 an der ebenen Stirnfläche der Abdeckplatte (Nr. 40 in Fig. 3) an, so dass der zweite Durchbruch 72 und die Schraubnut (Nr. 49 in Fig. 3) in einer Flucht angeordnet sind, wobei sie vom zweiten Schraubbolzen (Nr. 82 in Fig. 1) durchsetzt sind. Abseits des Befestigungsbereichs 78 sind eine äußere und eine innere Dichtlippenführung 75; 76 vorgesehen, zwischen denen die erste und die zweite Dichtlippe (Nr. 61; 62) in Fig. 2 eingeführt werden. Deren Form ist so an die dort unmittelbar aneinander anliegenden Dichtlippen angepasst, dass im Bereich der Endkappe kein Schmutz in die Linearbewegungsvorrichtung eindringen kann.

Um zu verhindern, dass die Dichtlippen durch die Bewegung des Wagens außer Eingriff mit den Dichtlippenführungen 75; 76 kommen, ist ein erster Durchbruch 71 in der Grundplatte 74 vorgesehen, welcher von einem ersten Schraubbolzen (Nr. 81 in Fig. 1) durchsetzt wird. Der erste Schraubbolzen hat ein Außengewinde, welches als Grob- bzw. als Holzgewinde ausgebildet ist. Er ist so angeordnet, dass sich der entsprechende Gewindegang in beide zugeordneten Dichtlippen eingräbt, so dass diese form- und/oder reibschlüssig in Richtung der Längsachse gehalten werden.

Weiter ist auf die insgesamt vier Gewindebohrungen 77 hinzuweisen, in welche die Druckluftanschlüsse (Nr. 12 in Fig. 1) einschraubbar sind. Die jeweils nicht benötigten Gewindebohrungen 77 werden vorzugsweise mit einem (nicht dargestellten) Blindstopfen luftdicht verschlossen.

Die Endkappe 70 ist einstückig ausgebildet, wobei sie aus Kunststoff oder Aluminium besteht. Vorzugsweise ist sie im Spritz- bzw. Druckgussverfahren hergestellt, wobei sie auch gefräst sein kann.

Fig. 5 zeigt eine perspektivische Ansicht der Dichtlippenführung 100. Die Dichtlippenführung 100 umfasst eine Grundplatte 105, von der zwei Seitenwände 106 rechtwinklig abstehen. Jede Seitenwand 106 bildet eine erste und eine zweite Führungsfläche 101; 102, welche in Richtung der Längsachse voneinander beabstandet sind. Die beiden ersten Führungsflächen 101 weisen aufeinander zu, wobei sie in Richtung der Längsachse kurz vor der Spitze des Verbindungskörpers angeordnet sind. Ihr Abstand ist so gewählt, dass sie die beiden zugeordneten Dichtlippen abseits des Verbindungskörpers unmittelbar aneinander andrücken. Damit wird verhindert, dass die Biegesteifigkeit der Dichtlippen dazu führt, dass sich kurz vor der Spitze des Verbindungskörpers (Nr. 32 in Fig. 3) ein kleiner Spalt zwischen den Dichtlippen bildet.

Die zweiten Führungsflächen 102 weisen ebenfalls aufeinander zu, wobei sie im Bereich der Einführschräge (Nr. 33 in Fig. 3) am Verbindungskörper angeordnet ist. Ihr Abstand zum Verbindungskörper (Nr. 32 in Fig. 3) ist so gewählt, dass sichergestellt ist, dass die Dichtlippen dort nicht vom Verbindungskörper abheben. Hierbei ist anzumerken, dass die Dichtlippen in diesem Bereich in erster Linie aufgrund ihrer Eigenspannung am Verbindungskörper anliegen.

Weiter ist auf den Befestigungsdurchbruch 104 in der Grundplatte 105 hinzuweisen, welcher von der Befestigungsschraube (Nr. 103 in Fig. 3) durchsetzt wird.

Fig. 6 zeigt einen Querschnitt der ersten bzw. der zweiten Dichtlippe 61; 62. Gezeigt ist die Querschnittsform, welche nach der Herstellung der Dichtlippen im unverspannten Zustand vorliegt. Im Einbauzustand sind die Dichtlippen zwischen 45° und 90° nach oben gebogen.

Die beiden Dichtlippen 61; 62 erstrecken sich jeweils mit der dargestellten, konstanten Querschnittsform über die gesamte Länge der Abdeckplatte (Nr. 40 in Fig. 3). Die Dichtlippen 61; 62 umfassen jeweils eine plattenartige Basis 68, welche sich zu ihrem freien Ende minimal verjüngt. Die Basis 68 kann, wie dargestellt, gerade ausgebildet sein. Es ist aber auch denkbar, eine gebogene Basis 68 vorzusehen, deren Aufbiegung geringer ist, als im späteren Einbauzustand. Am in Fig. 6 linken Ende der Basis 68 ist ein T-förmiger Befestigungsfortsatz 63 vorgesehen, welcher in die hinterschnittene Nut (Nr. 47 in Fig. 3) an der Abdeckplatte eingreift, so dass die Dichtlippe 61; 62 fest mit der Abdeckplatte verbunden ist. Benachbart zum Befestigungsfortsatz 63 ist ein Dichtfortsatz 67 vorgesehen, welcher bei der Montage der Dichtlippe 61; 62 an der Abdeckplatte nach oben gebogen wird, so dass er unter Vorspannung an der Abdeckplatte anliegt. Am im Fig. 6 rechten, freien Ende 65 der Dichtlippe 61; 62 sind insgesamt drei Stege 64 vorgesehen. Wenn die erste und die zweite Dichtlippe 61; 62 an ihrem freien Ende 65 unmittelbar aneinander anliegen, greifen diese Stege kammartig ineinander ein, so dass sich eine besonders gute Abdichtung ergibt. Die Stege 64 sind an ihrem freien Ende 66 verrundet ausgebildet.

Weiter ist auf den wenigstens einen Hilfssteg 69 hinzuweisen, welcher zwischen den Stegen 66 und dem Befestigungsfortsatz 63 angeordnet ist. Wie aus Fig. 2 kann dieser Hilfssteg 60 in Berührkontakt mit dem Verbindungskörper gelangen. Er verhindert, dass es zu einer vollflächigen Anlage zwischen der Dichtlippe 61; 62 und dem Verbindungskörper kommt, welche hohe Reibkräfte verursachen würde. Das freie Ende des Hilfsstegs 69 ist entsprechend den Stegen 63 verrundet ausgebildet.

### Bezugszeichen

- 10: Linearbewegungsvorrichtung
- 11: Längsachse
- 12: Druckluftanschluss
- 13: Gewindespindel

- 20: Gehäuse
- 21: Hauptkörper
- 22: Endblock
- 23: Befestigungsnut
- 24: Führungsschiene
- 25: Basis
- 26: U-Schenkel
- 27: Zwischenplatte

- 30: Schlitten
- 31: Verbindungsabschnitt
- 32: Verbindungskörper
- 33: Einführschräge
- 34: Tischplatte
- 35: Schmierkanal
- 36: Schmieranschluss
- 37: Führungswagen
- 38: Schlittengrundkörper

- 40: Abdeckplatte
- 41: erste Seitenfläche
- 42: zweite Seitenfläche
- 43: Schlitz
- 44: Endabschnitt
- 45: mittlerer Abschnitt
- 46: Materialbereich
- 47: hinterschnittene Nut
- 48: Seitenrand
- 49: Schraubnut
- 50: Vertiefung

- 61: erste Dichtlippe
- 62: zweite Dichtlippe
- 63: Befestigungsfortsatz
- 64: Steg
- 65: freies Ende einer Dichtlippe
- 66: freies Ende eines Stegs
- 67: Dichtfortsatz
- 68: Basis
- 69: Hilfssteg

- 70: Endkappe
- 71: erster Durchbruch
- 72: zweiter Durchbruch
- 73: dritter Durchbruch
- 74: Grundplatte
- 75: äußere Dichtlippenführung
- 76: innere Dichtlippenführung
- 77: Gewindebohrung
- 78: Befestigungsbereich

- 81: erster Schraubbolzen
- 82: zweiter Schraubbolzen

- 90: Befestigungsklammer
- 91: erster Gewindestift
- 92: zweiter Gewindestift
- 100: Dichtlippenführung
- 101: erste Führungsfläche
- 102: zweite Führungsfläche
- 103: Befestigungsschraube
- 104: Befestigungsdurchbruch
- 105: Grundplatte
- 106: Seitenwand

## Patentansprüche

1. Linearbewegungsvorrichtung (10) mit einem Gehäuse (20), an welchem ein Schlitten (30) in Richtung einer Längsachse (11) beweglich gelagert ist, wobei eine gesonderte Abdeckplatte (40) mit wenigstens einem Schlitz (43) vorgesehen ist, wobei der Schlitten (30) wenigstens einen Verbindungsabschnitt (31) aufweist, welcher jeweils einen zugeordneten Schlitz (43) durchsetzt, wobei die Abdeckplatte (40) von außen auf dem Gehäuse (20) zumindest mittelbar aufliegt, wobei sich der wenigstens eine Schlitz (43) in Richtung der Längsachse (11) ausschließlich über einen mittleren Abschnitt (45) der Abdeckplatte (40) erstreckt, so dass der mittlere Abschnitt (45) mehrere Materialbereiche (46) aufweist, welche durch den wenigstens einen Schlitz (43) voneinander getrennt sind, wobei die Abdeckplatte (40) zwei Endabschnitte (44) aufweist, welche in Richtung der Längsachse (11) an gegenüberliegenden Enden des mittleren Abschnitts (45) angeordnet sind, wobei die beiden Endabschnitte (44) einstückig mit den Materialbereichen (46) des mittleren Abschnitts (45) verbunden sind, wobei jedem Schlitz (43) eine erste und eine zweite biegeelastische Dichtlippe (61; 62) zugeordnet sind, welche an der Abdeckplatte (40) befestigt sind, wobei der betreffende Verbindungsabschnitt (31) derart zwischen der ersten und der zweiten Dichtlippe (61; 62) angeordnet ist, dass die erste und die zweite Dichtlippe (61; 62) am Verbindungsabschnitt (31) anliegen, wobei die erste und die zweite Dichtlippe (61; 62) abseits des zugeordneten Verbindungsabschnitts (31) unmittelbar aneinander anliegen, so dass sie den zugeordneten Schlitz (43) überdecken,
**dadurch gekennzeichnet, dass** zumindest einem Schlitz (43) zumindest eine gesonderte Endkappe (70) zugeordnet ist, welche an einem jeweils zugeordneten Endabschnitt (44) der Abdeckplatte (40) befestigt ist, wobei die Endkappe (70) die betreffende erste und die betreffende zweite Dichtlippe (61; 62) stirnseitig abdichtet.

2. Linearbewegungsvorrichtung nach Anspruch 1,
wobei die erste und die zweite Dichtlippe (61; 62) derart in die jeweils zugeordnete Endkappe (70) hineinragen, dass sie innerhalb der Endkappe (70) aneinander anliegen.

3. Linearbewegungsvorrichtung nach einem der vorstehenden Ansprüche,
wobei sich die erste und die zweite Dichtlippe (61; 62) jeweils über beide Endabschnitte (44) erstrecken.

4. Linearbewegungsvorrichtung nach einem der vorstehenden Ansprüche,
wobei das Gehäuse (20) einen Hauptkörper (21) umfasst, welcher als Profilkörper ausgebildet ist, wobei er sich in Richtung der Längsachse (11) erstreckt, wobei zwei gesonderte Endblöcke (22) vorgesehen sind, welche in Richtung der Längsachse (11) an gegenüber liegenden Enden des Hauptkörpers (21) befestigt sind, wobei die Endabschnitte (44) und die zumindest eine Endkappe (70) jeweils zumindest abschnittsweise im Bereich eines jeweils zugeordneten Endblocks (22) angeordnet sind.

5. Linearbewegungsvorrichtung nach einem der vorstehenden Ansprüche,
wobei jeder Schlitz (43) zwei aufeinander zu weisende erste Seitenflächen (41) aufweist, welche sich parallel zur Längsachse (11) erstrecken, wobei die Endabschnitte (44) für jeden Schlitz jeweils eine zweite Seitenfläche (42) bilden, welche die betreffenden ersten Seitenflächen (41) miteinander verbindet, wobei die zweiten Seitenflächen (42) jeweils zumindest abschnittsweise im Bereich eines zugeordneten Endblocks (22) angeordnet sind.

6. Linearbewegungsvorrichtung nach einem der vorstehenden Ansprüche,
wobei jedem Schlitz (43) zwei hinterschnittene Nuten (47) zugeordnet sind, welche sich parallel zur Längsachse (11) erstrecken, wobei sie quer zur Längsachse (11) auf gegenüberliegenden Seiten des betreffenden Schlitzes (43) in der Abdeckplatte (40) angeordnet sind, wobei sie sich über die beiden Endabschnitte (44) erstreckten, wobei die erste und die zweite Dichtlippe (61; 62) jeweils einen Befestigungsfortsatz (63) aufweist, welcher formschlüssig in eine zugeordnete hinterschnittene Nut (47) eingreift.

7. Linearbewegungsvorrichtung nach einem der vorstehenden Ansprüche,
wobei sich die erste und die zweite Dichtlippe (61; 62) jeweils mit einer konstanten Querschnittsform entlang der Längsachse (11) erstrecken, wobei sie an einem quer zur Längsachse (11) freien Ende (65) jeweils zumindest zwei Stege (64) aufweisen, wobei die Stege (64) der ersten und der zweiten Dichtlippe (61; 62) abseits des Verbindungsabschnitts (31) kammartig ineinander greifen.

8. Linearbewegungsvorrichtung nach einem der vorstehenden Ansprüche,
wobei die zumindest eine Endkappe (70) von einem ersten Schraubbolzen (81) durchsetzt ist, welcher ein Außengewinde aufweist, wobei der erste Schraubbolzen (81) derart zwischen der ersten und der zweiten Dichtlippe (61; 62) angeordnet ist, dass das Außengewinde die erste und die zweite Dichtlippe (61; 62) in Richtung der Längsachse (11) hält.

9. Linearbewegungsvorrichtung nach einem der vorstehenden Ansprüche,
wobei die zumindest eine Endkappe (70) in Richtung der Längsachse (11) von einem zweiten Schraubbolzen (82) durchsetzt ist, welcher in einen zugeordneten Endabschnitt (44) der Abdeckplatte (40) eingeschraubt ist.

10. Linearbewegungsvorrichtung nach einem der vorstehenden Ansprüche,
wobei die Abdeckplatte (40) zwei quer zur Längsachse (11) voneinander weg weisende Seitenränder (48) aufweist, welche sich parallel zur Längsachse (11) erstrecken, wobei jedem Seitenrand (48) eine Befestigungsnut (23) im Hauptkörper (21) zugeordnet ist, welche abseits der Abdeckplatte (40) angeordnet ist, wobei sie parallel zur Längsachse (11) verläuft, wobei jedem Seitenrand (48) wenigstens zwei Befestigungsklammern (90) zugordnet sind, welche in die betreffende Befestigungsnut (23) formschlüssig eingreifen, wobei sie den betreffenden Seitenrand (48) umgreifen.

11. Linearbewegungsvorrichtung nach einem der vorstehenden Ansprüche,
wobei wenigstens eine Dichtlippenführung (100) vorgesehen ist, welche an einem zugeordneten Verbindungsabschnitt (31) angeordnet ist, wobei die Dichtlippenführung (100) zwei erste Führungsflächen (101) aufweist, welche aufeinander zu weisen, wobei die betreffende erste und zweite Dichtlippe (61; 62) abschnittsweise zwischen den ersten Führungsflächen (101) angeordnet sind, wobei sie dort unmittelbar aneinander anliegen.

12. Linearbewegungsvorrichtung nach einem der vorstehenden Ansprüche,
wobei zumindest eine Endkappe (70) mit einem Druckluftanschluss (12) versehen ist, so dass Druckluft zwischen die betreffende erste und zweite Dichtlippe (61; 62) leitbar ist.

## Claims

1. Linear movement device (10) with a housing (20) on which a slide (30) is mounted movably in the direction of a longitudinal axis (11), wherein a separate cover plate (40) having at least one slot (43) is provided, wherein the slide (30) has at least one connecting portion (31) which passes in each case through an assigned slot (43), wherein the cover plate (40) rests at least indirectly on the housing (20) from the outside, wherein the at least one slot (43) extends exclusively over a central portion (45) of the cover plate (40) in the direction of the longitudinal axis (11), and therefore the central portion (45) has a plurality of material regions (46) which are separated from one another by the at least one slot (43), wherein the cover plate (40) has two end portions (44) which are arranged at opposite ends of the central portion (45) in the direction of the longitudinal axis (11), wherein the two end portions (44) are connected integrally to the material regions (46) of the central portion (45), wherein each slot (43) is assigned a first and a second flexurally elastic sealing lip (61; 62), said sealing lips being fastened to the cover plate (40), wherein the relevant connecting portion (31) is arranged between the first and the second sealing lip (61; 62) in such a manner that the first and the second sealing lip (61; 62) lie against the connecting portion (31), wherein the first and the second sealing lip (61; 62) lie directly against each other away from the assigned connecting portion (31) such that said sealing lips overlap the assigned slot (43), **characterized in that** at least one slot (43) is assigned at least one separate end cap (70) which is fastened to a respectively assigned end portion (44) of the cover plate (40), the end cap (70) sealing the relevant first and the relevant second sealing lip (61; 62) on the end side.

2. Linear movement device according to Claim 1, wherein the first and the second sealing lip (61; 62) project into the respectively assigned end cap (70) in such a manner that they lie against each other within the end cap (70).

3. Linear movement device according to either of the preceding claims, wherein the first and the second sealing lip (61; 62) each extend over the two end portions (44).

4. Linear movement device according to one of the preceding claims, wherein the housing (20) comprises a main body (21) which is designed as a profile body, wherein said main body extends in the direction of the longitudinal axis (11), wherein two separate end blocks (22) are provided which are fastened to opposite ends of the main body (21) in the direction of the longitudinal axis (11), wherein the end portions (44) and the at least one end cap (70) are arranged in each case at least in sections in the region of a respectively assigned end block (22).

5. Linear movement device according to one of the preceding claims, wherein each slot (43) has two first side surfaces (41) which face each other and extend parallel to the longitudinal axis (11), wherein, for each slot, the end portions (44) in each case form a second side surface (42) which connects the relevant first side surfaces (41) to each other, wherein the second side surfaces (42) are each arranged at least in sections in the region of an assigned end block (22).

6. Linear movement device according to one of the preceding claims, wherein each slot (43) is assigned two undercut grooves (47) which extend parallel to the longitudinal axis (11), wherein said grooves are arranged on opposite sides of the relevant slot (43) in the cover plate (40) transversally with respect to the longitudinal axis (11), wherein said grooves extend over the two end portions (44), wherein the first and the second sealing lip (61; 62) in each case has a fastening extension (63) which engages in a form-fitting manner in an assigned undercut groove (47).

7. Linear movement device according to one of the preceding claims, wherein the first and the second sealing lip (61; 62) each extend with a constant cross-sectional shape along the longitudinal axis (11), wherein said sealing lips each have at least two webs (64) at a free end (65) transversally with respect to the longitudinal axis (11), wherein the webs (64) of the first and the second sealing lip (61; 62) intermesh in the manner of a comb away from the connecting portion (31).

8. Linear movement device according to one of the preceding claims, wherein the at least one end cap (70) is passed through by a first screw bolt (81) which has an external thread, wherein the first screw bolt (81) is arranged between the first and the second sealing lip (61; 62) in such a manner that the external thread holds the first and the second sealing lip (61; 62) in the direction of the longitudinal axis (11).

9. Linear movement device according to one of the preceding claims, wherein the at least one end cap (70) is passed through in the direction of the longitudinal axis (11) by a second screw bolt (82) which is screwed into an assigned end portion (44) of the cover plate (40).

10. Linear movement device according to one of the preceding claims, wherein the cover plate (40) has two side edges (48) which point away from each other transversally with respect to the longitudinal axis (11) and extend parallel to the longitudinal axis (11), wherein each side edge (48) is assigned a fastening groove (23) in the main body (21), said fastening groove being arranged away from the cover plate (40), wherein said fastening groove runs parallel to the longitudinal axis (11), wherein each side edge (48) is assigned at least two fastening clips (90) which engage in a form-fitting manner in the relevant fastening groove (23), wherein said fastening clips engage around the relevant side edge (48).

11. Linear movement device according to one of the preceding claims, wherein at least one sealing lip guide (100) is provided which is arranged on an assigned connecting portion (31), wherein the sealing lip guide (100) has two first guide surfaces (101) which face each other, wherein the relevant first and second sealing lip (61; 62) are arranged in sections between the first guide surfaces (101), wherein said sealing lips lie directly against each other there.

12. Linear movement device according to one of the preceding claims, wherein at least one end cap (70) is provided with a compressed air connection (12), and therefore compressed air can be conducted between the relevant first and second sealing lip (61; 62).

## Revendications

1. Dispositif de mouvement linéaire (10) comprenant un boîtier (20) sur lequel un chariot (30) est supporté de manière déplaçable dans la direction d'un axe longitudinal (11), une plaque de recouvrement séparée (40) comprenant au moins une fente (43) étant prévue, le chariot (30) présentant au moins une portion de liaison (31) qui traverse à chaque fois une fente associée (43), la plaque de recouvrement (40) reposant depuis l'extérieur au moins indirectement sur le boîtier (20), l'au moins une fente (43) s'étendant dans la direction de l'axe longitudinal (11) exclusivement sur une portion centrale (45) de la plaque de recouvrement (40) de telle sorte que la portion centrale (45) présente plusieurs régions de matériau (46) qui sont séparées les unes des autres par l'au moins une fente (43), la plaque de recouvrement (40) présentant deux portions d'extrémité (44) qui sont disposées dans la direction de l'axe longitudinal (11) à des extrémités opposées de la portion centrale (45), les deux portions d'extrémité (44) étant connectées d'une seule pièce aux régions de matériau (46) de la portion centrale (45), une première et une deuxième lèvre d'étanchéité élastiquement flexibles (61 ; 62) étant associées à chaque fente (43), lesquelles sont fixées à la plaque de recouvrement (40), la portion de liaison concernée (31) étant disposée entre la première et la deuxième lèvre d'étanchéité (61 ; 62) de telle sorte que la première et la deuxième lèvre d'étanchéité (61 ; 62) s'appliquent contre la portion de liaison (31), la première et la deuxième lèvre d'étanchéité (61 ; 62) s'appliquant directement l'une contre l'autre à l'écart de la portion de liaison associée (31) de telle sorte qu'elles recouvrent la fente associée (43),
**caractérisé en ce qu'**au moins un embout séparé (70) est associé à au moins une fente (43), lequel est fixé au niveau d'une portion d'extrémité (44) respectivement associée de la plaque de recouvrement (40), l'embout (70) étanchéifiant du côté frontal la première et la deuxième lèvre d'étanchéité concernées (61 ; 62).

2. Dispositif de mouvement linéaire selon la revendication 1,
dans lequel la première et la deuxième lèvre d'étanchéité (61 ; 62) pénètrent dans l'embout respectivement associé (70) de telle sorte qu'elles s'appliquent l'une contre l'autre à l'intérieur de l'embout (70).

3. Dispositif de mouvement linéaire selon l'une quelconque des revendications précédentes, dans lequel la première et la deuxième lèvre d'étanchéité (61 ; 62) s'étendent à chaque fois sur les deux portions d'extrémité (44).

4. Dispositif de mouvement linéaire selon l'une quelconque des revendications précédentes, dans lequel le boîtier (20) comprend un corps principal (21) qui est réalisé sous la forme d'un corps profilé, le corps principal s'étendant dans la direction de l'axe longitudinal (11), deux blocs d'extrémité séparés (22) étant prévus, lesquels sont fixés dans la direction de l'axe longitudinal (11) à des extrémités opposées du corps principal (21), les portions d'extrémité (44) et l'au moins un embout (70) étant disposés à chaque fois au moins en partie dans la région d'un bloc d'extrémité respectivement associé (22).

5. Dispositif de mouvement linéaire selon l'une quelconque des revendications précédentes, dans lequel chaque fente (43) présente deux premières surfaces latérales tournées l'une vers l'autre (41) qui s'étendent parallèlement à l'axe longitudinal (11), les portions d'extrémité (44) formant pour chaque fente à chaque fois une deuxième surface latérale (32) qui relie l'une à l'autre les premières surfaces latérales concernées (41), les deuxièmes surfaces latérales (42) étant à chaque fois disposées au moins en partie dans la région d'un bloc d'extrémité associé (22).

6. Dispositif de mouvement linéaire selon l'une quelconque des revendications précédentes, dans lequel deux rainures en contre-dépouille (47) sont associées à chaque fente (43), lesquelles s'étendent parallèlement à l'axe longitudinal (11), les rainures en contre-dépouille étant disposées transversalement à l'axe longitudinal (11) sur des côtés opposés de la fente concernée (43) dans la plaque de recouvrement (40) et s'étendant sur les deux portions d'extrémité (44), la première et la deuxième lèvre d'étanchéité (61 ; 62) présentant à chaque fois une saillie de fixation (63) qui s'engage par engagement par correspondance de formes dans une rainure en contre-dépouille associée (47).

7. Dispositif de mouvement linéaire selon l'une quelconque des revendications précédentes, dans lequel la première et la deuxième lèvre d'étanchéité (61 ; 62) s'étendent à chaque fois avec une forme constante en section transversale le long de l'axe longitudinal (11), dans lequel elles présentent au niveau d'une extrémité libre (65) transversalement à l'axe longitudinal (11) à chaque fois au moins deux nervures (64), les nervures (64) de la première et de la deuxième lèvre d'étanchéité (61 ; 62) s'engageant l'une dans l'autre à la manière d'un peigne à l'écart de la portion de liaison (31).

8. Dispositif de mouvement linéaire selon l'une quelconque des revendications précédentes, dans lequel l'au moins un embout (70) est traversé par un premier boulon fileté (81) qui présente un filetage extérieur, le premier boulon fileté (81) étant disposé entre la première et la deuxième lèvre d'étanchéité (61 ; 62) de telle sorte que le filetage extérieur retienne la première et la deuxième lèvre d'étanchéité (61 ; 62) dans la direction de l'axe longitudinal (11).

9. Dispositif de mouvement linéaire selon l'une quelconque des revendications précédentes, dans lequel l'au moins un embout (70) est traversé dans la direction de l'axe longitudinal (11) par un deuxième boulon fileté (82) qui est vissé dans une portion d'extrémité associée (44) de la plaque de recouvrement (40).

10. Dispositif de mouvement linéaire selon l'une quelconque des revendications précédentes, dans lequel la plaque de recouvrement (40) présente deux bords latéraux (48) orientés à l'écart l'un de l'autre transversalement à l'axe longitudinal (11), lesquels s'étendent parallèlement à l'axe longitudinal (11), une rainure de fixation (23) dans le corps principal (21) étant associée à chaque bord latéral (48), laquelle est disposée à l'écart de la plaque de recouvrement (40), la rainure de fixation s'étendant parallèlement à l'axe longitudinal (11), au moins deux pinces de fixation (90) étant associées à chaque bord latéral (48), lesquelles s'engagent par engagement par correspondance de formes dans la rainure de fixation concernée (23), les pinces de fixation venant en prise autour du bord latéral concerné (48).

11. Dispositif de mouvement linéaire selon l'une quelconque des revendications précédentes, dans lequel au moins un guide de lèvre d'étanchéité (100) est prévu, lequel est disposé au niveau d'une portion de liaison associée (31), le guide de lèvre d'étanchéité (100) présentant deux premières surfaces de guidage (101) qui sont tournées l'une vers l'autre, la première et la deuxième lèvre d'étanchéité concernées (61 ; 62) étant disposées en partie entre les premières surfaces de guidage (101), et s'appliquant directement l'une contre l'autre à cet endroit.

12. Dispositif de mouvement linéaire selon l'une quelconque des revendications précédentes, dans lequel au moins un embout (70) est pourvu d'un raccord d'air comprimé (12) de telle sorte que de l'air comprimé puisse être guidé entre la première et la deuxième lèvre d'étanchéité concernées (61 ; 62).
